# EUROPÄISCHE PATENTSCHRIFT

(11) **EP 0 773 492 B1**
(45) Veröffentlichungstag und Bekanntmachung des Hinweises auf die Patenterteilung: **13.02.2002**
(21) Anmeldenummer: 96117762.3
(22) Anmeldetag: 06.11.1996
(51) Int. Cl.: G06F 1/16

(54) **Gehäuse für ein Datenverarbeitungsgerät**
Housing for data processing apparatus
Boîtier pour appareil de traitement de données

(30) Priorität: 07.11.1995 DE 19541444
(43) Veröffentlichungstag der Anmeldung: 14.05.1997
(73) Patentinhaber: Still Wagner GmbH & Co. KG, 72760 Reutlingen (DE)
(72) Erfinder: Reiff, Helmut, Dipl.-Ing., 72805 Lichtenstein (DE)
(74) Vertreter: Kasseckert, Rainer

(56) Entgegenhaltungen:
- EP-A- 0 360 032
- US-A- 5 408 382
- IBM TECHNICAL DISCLOSURE BULLETIN, Bd. 36, Nr. 9A, 1.September 1993, Seite 3/4 XP000395121 "MULTIPLE HUMAN INTERFACES FOR A COMMON CENTRAL ELECTRONIC COMPLEX"

## Beschreibung

Die Erfindung betrifft ein Gehäuse für ein Datenverarbeitungsgerät mit einer Recheneinheit, einer Anzeigevorrichtung und einer Eingabevorrichtung, wobei das Gehäuse mittels einer Halterung an einem Fahrzeug oder stationär an einem Arbeitsplatz befestigbar ist.

Mit Datenverarbeitungsgeräten dieser Art werden beispielsweise Flurförderzeuge ausgerüstet. Von der Anzeigevorrichtung des Datenverarbeitungsgeräts kann der Fahrer des Flurförderzeugs verschiedene Nachrichten wie z.B. Fahraufträge oder Kommissionieraufträge ablesen. Mit der Eingabevorrichtung kann der Fahrer unter anderem den Erhalt der Aufträge und deren Ausführung bestätigen. Datenverarbeitungsgeräte auf Fahrzeugen sind zu diesem Zweck häufig mit einer drahtlosen Kommunikationsvorrichtung, z.B. einem Funkmodem, ausgerüstet. Mit der Halterung ist das Datenverarbeitungsgerät an einer geeigneten Stelle ergonomisch günstig am Fahrzeug befestigt. Damit ist der Fahrer stets in der Lage, die Anzeigevorrichtung abzulesen oder die Eingabevorrichtung zu betätigen.

Datenverarbeitungsgeräte dieser Art werden weiterhin als Bedienstationen für stationäre Maschinen oder als Datenterminals für Arbeitsplätze eingesetzt. Mit der Halterung wird dabei das Datenverarbeitungsgerät möglichst günstig im Bereich des Arbeitsplatzes angeordnet und kann für eine Vielzahl von Anwendungen, z.B. Lagerverwaltung oder Maschinensteuerung, eingesetzt werden.

Bei den Datenverarbeitungsgeräten des Standes der Technik sind die Recheneinheit, die Anzeigevorrichtung und die Eingabevorrichtung in einem gemeinsamen Gehäuse angeordnet. Bei dieser Anordnung ist eine kompakte Bauweise des Datenverarbeitungsgeräts sichergestellt. Außerdem wird die Anordnung von Kabeln außerhalb des Gehäuses vermieden.

In Abhängigkeit vom Einsatzort des Datenverarbeitungsgeräts und der verwendeten Software sind oftmals unterschiedliche Eingabevorrichtungen vorgesehen, die sich hinsichtlich Baugröße sowie Anzahl, Größe und Beschriftung von Tasten und deren Ausführung, z.B. Folientastatur oder Tasten mit Anschlag, unterscheiden können. Es ist weiterhin möglich, als Eingabevorrichtung zusätzlich eine Maus vorzusehen. Je nach Einsatzort können ebenfalls verschiedene Anzeigevorrichtungen, z.B. ELD-Bildschirme oder LCD-Bildschirme, in unterschiedlichen Größen vorgesehen werden.

Bei den Datenverarbeitungsgeräten des Standes der Technik wird für jede mögliche Kombination von Eingabevorrichtung und Anzeigevorrichtung ein speziell angepaßtes Gehäuse verwendet. Alternativ dazu ist es ebenfalls üblich, ein einheitliches großes Gehäuse vorzusehen, in dem gegebenenfalls eine kleinere Eingabevorrichtung oder eine kleinere Anzeigevorrichtung angeordnet wird. In diesem Fall wird ein großer Teil des innerhalb des Gehäuses zur Verfügung stehenden Bauraums nicht genutzt. Desweiteren ist es nicht möglich, eine vorgesehene Eingabevorrichtung durch eine Eingabevorrichtung unterschiedlicher Bauart zu ersetzen. Gleiches gilt für unterschiedliche Anzeigevorrichtungen.

Der vorliegenden Erfindung liegt die Aufgabe zugrunde, ein Gehäuse für ein Datenverarbeitungsgerät zur Verfügung zu stellen, das in einfacher Weise an den jeweiligen Einsatzort angepaßt werden kann.

Diese Aufgabe wird erfindungsgemäß dadurch gelöst, daß das Gehäuse mehrteilig ausgeführt ist und ein Basisgehäuseteil sowie mindestens einen Gehäuseaufsatz aufweist, wobei die Halterung an dem Basisgehäuseteil befestigt ist und die Recheneinheit innerhalb des Basisgehäuseteils angeordnet ist und wobei die Eingabevorrichtung und/oder die Anzeigevorrichtung in dem Gehäuseaufsatz angeordnet sind, der an dem Basisgehäuseteil lösbar befestigt ist.

Erfindungsgemäß sind in dem Basisgehäuseteil die Recheneinheit sowie sonstige, nicht auswechselbare Bauteile des Datenverarbeitungsgeräts angeordnet. Die Eingabevorrichtung und/oder die Anzeigevorrichtung befinden sich in einem Gehäuseaufsatz, der an dem Basisgehäuseteil lösbar angeordnet ist. Der Gehäuseaufsatz kann somit auf einfache Weise von dem Basisgehäuseteil getrennt und wieder daran befestigt werden. Es ist daher problemlos möglich, einen Gehäuseaufsatz mit einer anderen Eingabevorrichtung und/oder einer anderen Anzeigevorrichtung zu montieren.

Vorteilhaft ist es, wenn ein Gehäuseaufsatz für die Eingabevorrichtung vorgesehen ist. Der Gehäuseaufsatz mit der Eingabevorrichtung kann damit unabhängig von den übrigen Bauteilen des Datenverarbeitungsgeräts montiert und demontiert werden.

Ebenso ist es vorteilhaft, wenn ein Gehäuseaufsatz für die Anzeigevorrichtung vorgesehen ist. Damit kann die Anzeigevorrichtung ohne Rücksicht auf die Eingabevorrichtung sowie sonstige Bauteile mit dem Gehäuseaufsatz an dem Basisgehäuseteil befestigt werden.

Besonders zweckmäßig ist es, wenn unterschiedliche Gehäuseaufsätze für unterschiedliche Eingabevorrichtungen vorgesehen sind, die wahlweise an dem selben Basisgehäuseteil befestigbar sind. Die Abmessungen der unterschiedlichen Gehäuseaufsätze können genau an die jeweilige Eingabevorrichtung angepaßt werden. Die Baugröße der Gehäuseaufsätze entspricht somit in jedem Fall dem Platzbedarf der Eingabevorrichtung. Dadurch, daß die unterschiedlichen Gehäuseaufsätze an das selbe Basisgehäuseteil anbaubar sind, ergibt sich eine schnelle Anpaßbarkeit des Datenverarbeitungsgeräts an unterschiedliche Einsatzorte und Einsatzzwecke.

Diese Vorteile gelten analog für die nächste vorteilhafte Ausgestaltung der Erfindung, in der unterschiedliche Gehäuseaufsätze für unterschiedliche Anzeigevorrichtungen vorgesehen sind, welche wahlweise an dem selben Basisgehäuseteil befestigbar sind.

Eine besonders zweckmäßige Weiterbildung der Erfindung ergibt sich, wenn der Gehäuseaufsatz formschlüssig an dem Basisgehäuseteil befestigbar ist. Durch die formschlüssige Befestigung ist eine sichere Verbindung des Gehäuseaufsatzes an dem Basisgehäuseteil, auch während des Betriebs auf vibrierenden Fahrzeugen, gewährleistet.

Eine zweckmäßige Ausgestaltung der Erfindung besteht darin, daß die Recheneinheit mit der Anzeigevorrichtung und/oder mit der Eingabevorrichtung mittels mindestens eines elektrischen Verbindungskabels verbindbar ist, welches ausschließlich innerhalb des Basisgehäuseteils oder innerhalb des Gehäuseaufsatzes angeordnet ist. Durch die Anordnung des Verbindungskabels innerhalb der verschiedenen Gehäuseteile wird dieses vor mechanischen Beschädigungen während des Betriebs des Datenverarbeitungsgeräts geschützt. Ein Entfernen des Verbindungskabels ist ausschließlich bei demontiertem Gehäuseaufsatz möglich.

Mit besonderem Vorteil ist die Recheneinheit mit der Anzeigevorrichtung und/oder mit der Eingabevorrichtung mittels mindestens einer Kupplung-Stecker-Verbindung verbindbar, welche an einer Verbindungsstelle des Basisgehäuseteils zum Gehäuseaufsatz angeordnet ist. Mit einer derartig angeordneten Kupplung-Stecker-Verbindung wird die Anzeigevorrichtung bzw. die Eingabevorrichtung automatisch mit der Recheneinheit verbunden, sobald der Gehäuseaufsatz an dem Basisgehäuseteil befestigt wird. Ein zusätzliches Anstecken von Kabeln ist dann nicht erforderlich.

Eine weitere zweckmäßige Ausgestaltung besteht darin, daß die Recheneinheit mit externen Bauteilen, z.B. einer Stromversorgung oder einem Drucker, mittels eines Kabels verbindbar ist, welches zumindest teilweise innerhalb der Halterung angeordnet ist. Es ist damit sichergestellt, daß weder das Basisgehäuseteil, noch der Gehäuseaufsatz von außen sichtbare Steckerbuchsen und Verbindungskabel aufweisen.

Weiterhin ist es von Vorteil, wenn ein einziger Gehäuseaufsatz vorgesehen ist, in dem als Anzeigevorrichtung und Eingabevorrichtung ein Touch-Display angeordnet ist. Mit einem Touch-Display, einem Bildschirm mit berührungsaufnehmenden Sensoren, lassen sich die Funktionen der Anzeigevorrichtung und der Eingabevorrichtung in einem Bauteil kombinieren.

Außerdem ist es vorteilhaft, wenn das Basisgehäuseteil mit dem Gehäuseaufsatz ein geschlossenes Bauteil bildet. Die verschiedenen Gehäuseteile bilden optisch und funktionell eine Einheit, wodurch einerseits mechanischen Beschädigungen, andererseits dem Eindringen von Schmutz vorgebeugt wird.

Die Erfindung sowie weitere Einzelheiten der Erfindung werden im folgenden anhand von in schematischen Figuren dargestellten Ausführungsbeispielen näher erläutert. Hierbei zeigen:
- Figur 1: einen Querschnitt eines erfindungsgemäßen Gehäuses,
- Figur 2: einen Längsschnitt eines erfindungsgemäßen Gehäuses,
- Figur 3 und Figur 4: ein Datenverarbeitungsgerät mit erfindungsgemäßem Gehäuse in Draufsicht.

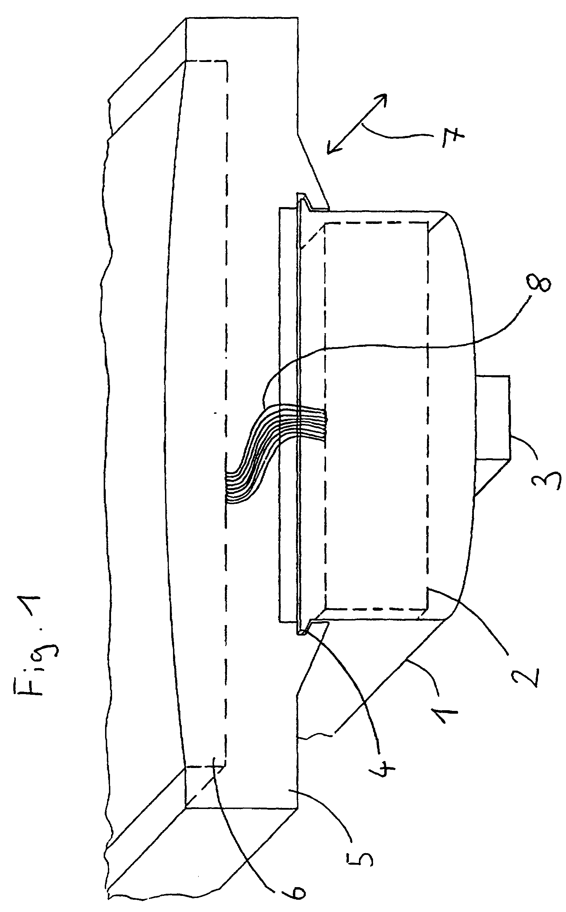

In Figur 1 ist ein Querschnitt eines erfindungsgemäßen Gehäuses dargestellt. In einem Basisgehäuseteil 1 ist eine Recheneinheit 2 angeordnet. Das Basisgehäuseteil 1 ist mit einer Halterung 3 beispielsweise an dem Bedienpult eines Flurförderzeugs befestigt. Über die Führung 4 ist an dem Basisgehäuseteil 1 ein Gehäuseaufsatz 5 befestigt. Der Gehäuseaufsatz 5 wird in Richtung 7 entlang der Führung 4 auf das Basisgehäuseteil aufgeschoben. In dem Gehäuseaufsatz 5 ist als Anzeigevorrichtung 6 ein Bildschirm angeordnet. Die Anzeigevorrichtung 6 ist in diesem Ausführungsbeispiel über ein innerhalb des Basisgehäuses 1 und des Gehäuseaufsatzes 5 angeordnetes Verbindungskabel 8 mit der Recheneinheit 2 verbunden. Die verschiedenen Gehäuseteile bilden in dieser Anordnung eine geschlossene Einheit. Durch die sich über die ganze Läge des Basisgehäuseteils 1 erstreckend Führung 4 wird eine Relativbewegung zwischen den Gehäuseteilen verhindert.

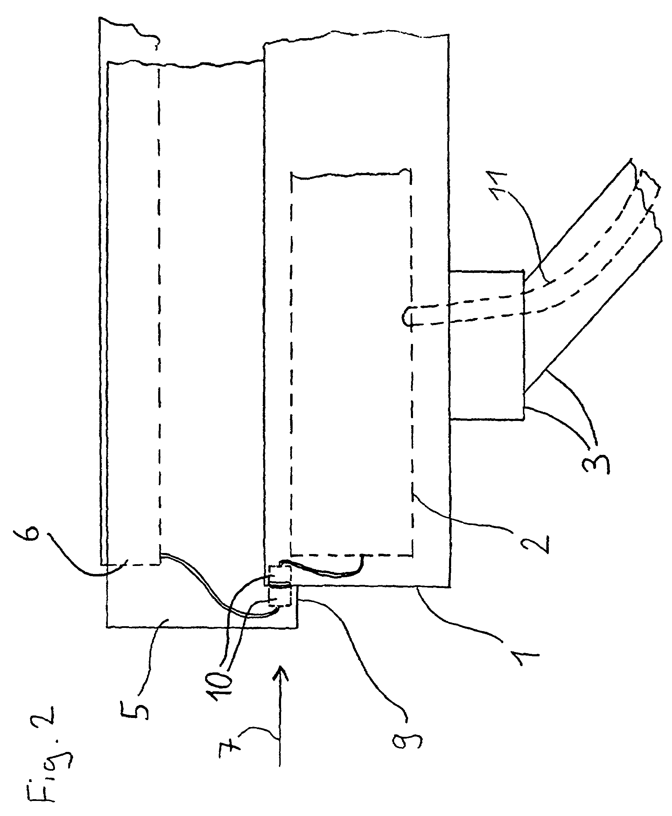

In Figur 2 ist ein Längsschnitt des erfindungsgemäßen Gehäuses dargestellt. Der Gehäuseaufsatz wird auf das Basisgehäuseteil 1 in Richtung 7 bis zu der in der Figur 2 dargestellten Position aufgeschoben, in der der Anschlag 9 an dem Basisgehäuseteil ansteht. In diesem Ausführungsbeispiel wird die Anzeigevorrichtung 6 über eine Kupplung-Stecker-Verbindung 10 mit der Recheneinheit 2 verbunden. Diese Kupplung-Stecker-Verbindung 10 wird bei einer Demontage des Gehäuseaufsatzes 5 von dem Basisgehäuseteil automatisch getrennt und bei einer erneuten Montage wieder automatisch verbunden. Eine Verbindung der Recheneinheit 2 nach außen erfolgt über ein Kabel 11, welches innerhalb der Halterung 3 angeordnet ist. Damit befinden sich außen an den verschiedenen Gehäuseteilen keinerlei störende Steckeranschlüsse oder Kabelverbindungen.

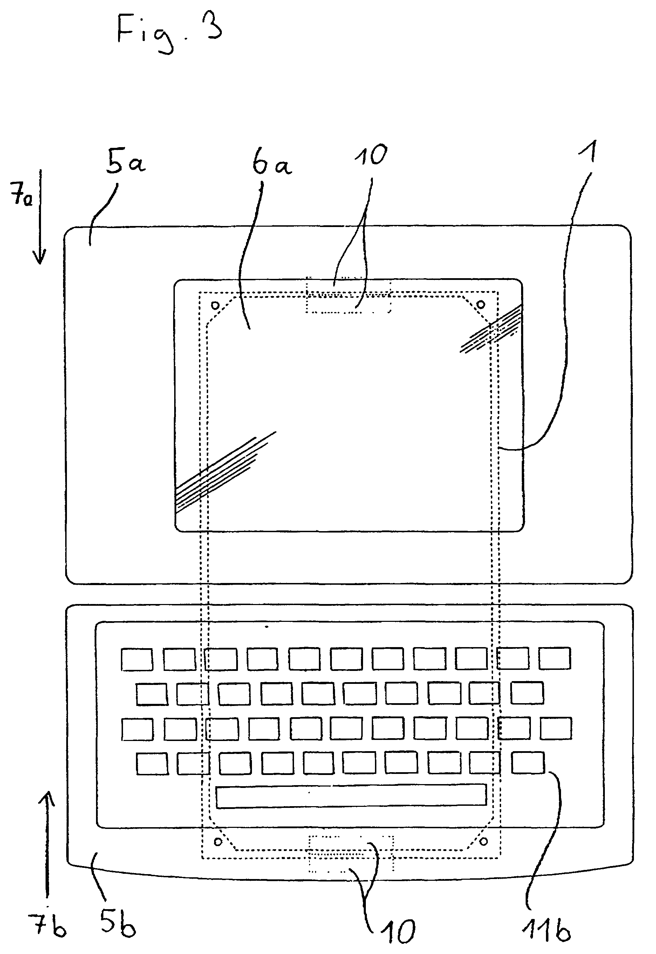

In Figur 3 ist ein Datenverarbeitungsgerät mit erfindungsgemäßem Gehäuse in Draufsicht dargestellt. Mit gestrichelten Linien ist das Basisgehäuse 1 eingezeichnet, auf welches der Gehäuseaufsatz 5a mit dem Bildschirm 6a in Richtung 7a und der Gehäuseaufsatz 5b mit der Tastatur 11b in Richtung 7b aufgeschoben wurden. Die Verbindung mit der nicht dargestellten Recheneinheit mit dem Bildschirm 6a bzw. der Tastatur 11b wird mit den Kupplung-Stecker-Verbindungen 10 hergestellt.

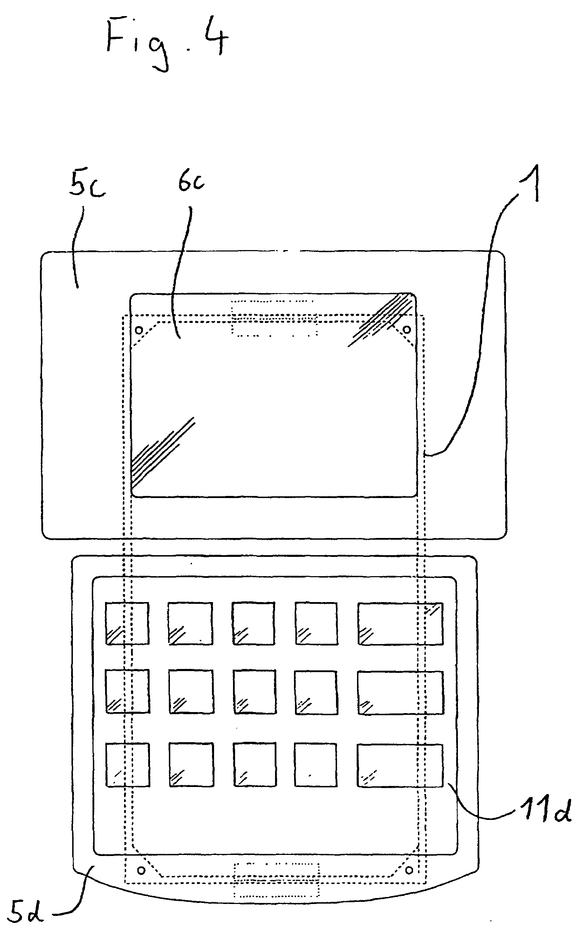

Mit Figur 4 wird verdeutlicht, daß auf das selbe Basisgehäuseteil 1 ein unterschiedlicher Gehäuseaufsatz 5c mit einem unterschiedlichen Bildschirm 6c aufgeschoben werden kann. Gleiches gilt für den Gehäuseaufsatz 5d mit der Tastatur 11d. Da die verschiedenen Gehäuseaufsätze 5a, 5c bzw. 5b, 5d die selben Anschlußmaße und jeweils gleiche Kupplung-Stecker-Verbindungen 10 aufweisen, können die Bildschirme 6a, 6b und die Tastaturen 11a, 11b beliebig ausgetauscht werden.

## Patentansprüche

1. Gehäuse für ein Datenverarbeitungsgerät mit einer Recheneinheit, einer Anzeigevorrichtung und einer Eingabevorrichtung, wobei das Gehäuse mittels einer Halterung (3) an einem Fahrzeug oder stationär an einem Arbeitsplatz befestigbar ist, **dadurch gekennzeichnet, daß** das Gehäuse mehrteilig ausgeführt ist und ein Basisgehäuseteil (1) sowie mindestens einen Gehäuseaufsatz (5) aufweist, wobei die Halterung (3) an dem Basisgehäuseteil (1) befestigt ist und die Recheneinheit (2) innerhalb des Basisgehäuseteils (1) angeordnet ist und wobei die Eingabevorrichtung und/oder die Anzeigevorrichtung (6) in dem Gehäuseaufsatz (5) angeordnet sind, der an dem Basisgehäuseteil (1) lösbar befestigt ist.

2. Gehäuse nach Anspruch 1, **dadurch gekennzeichnet, daß** ein Gehäuseaufsatz (5) für die Eingabevorrichtung vorgesehen ist.

3. Gehäuse nach Anspruch 1 oder 2, **dadurch gekennzeichnet, daß** ein Gehäuseaufsatz (5) für die Anzeigevorrichtung (6) vorgesehen ist.

4. Gehäuse nach einem der Ansprüche 1 bis 3, **dadurch gekennzeichnet, daß** unterschiedliche Gehäuseaufsätze (5) für unterschiedliche Eingabevorrichtungen vorgesehen sind, die wahlweise an dem selben Basisgehäuseteil (1) befestigbar sind.

5. Gehäuse nach einem der Ansprüche 1 bis 4, **dadurch gekennzeichnet, daß** unterschiedliche Gehäuseaufsätze (5) für unterschiedliche Anzeigevorrichtungen (6) vorgesehen sind, die wahlweise an dem selben Basisgehäuseteil (1) befestigbar sind.

6. Gehäuse nach einem der Ansprüche 1 bis 5, **dadurch gekennzeichnet, daß** der Gehäuseaufsatz (5) formschlüssig an dem Basisgehäuseteil (1) befestigbar ist.

7. Gehäuse nach einem der Ansprüche 1 bis 6, **dadurch gekennzeichnet, daß** die Recheneinheit (2) mit der Anzeigevorrichtung (6) und/oder mit der Eingabevorrichtung mittels mindestens eines elektrischen Verbindungskabels (8) verbindbar ist, welches ausschließlich innerhalb des Basisgehäuseteils (1) oder innerhalb des Gehäuseaufsatzes (5) angeordnet ist.

8. Gehäuse nach einem der Ansprüche 1 bis 7, **dadurch gekennzeichnet, daß** die Recheneinheit (2) mit der Anzeigevorrichtung (6) und/oder mit der Eingabevorrichtung mittels mindestens einer Kupplung-Stecker-Verbindung (10) verbindbar ist, welche an einer Verbindungsstelle des Basisgehäuseteils (1) zum Gehäuseaufsatz (5) angeordnet ist.

9. Gehäuse nach einem der Ansprüche 1 bis 8, **dadurch gekennzeichnet, daß** die Recheneinheit (2) mit externen Bauteilen, z.B. einer Stromversorgung oder einem Drucker, mittels eines Kabels (11) verbindbar ist, welches zumindest teilweise innerhalb der Halterung (3) angeordnet ist.

10. Gehäuse nach einem der Ansprüche 1 bis 9, **dadurch gekennzeichnet, daß** ein einziger Gehäuseaufsatz (5) vorgesehen ist, in dem als Anzeigevorrichtung (6) und Eingabevorrichtung ein Touch-Display angeordnet ist.

11. Gehäuse nach einem der Ansprüche 1 bis 10, **dadurch gekennzeichnet, daß** das Basisgehäuseteil (1) mit dem Gehäuseaufsatz (5) ein geschlossenes Bauteil bildet.

## Claims

1. Housing for a data processor having a computing unit, a display arrangement and an input arrangement (6), it being possible for the housing to be fastened on a vehicle, or in a stationary manner on a workstation, by means of a mount (3), **characterized in that** the housing is configured in a number of parts and has a basic housing part (1) and at least one housing attachment (5), the mount (3) being fastened on the basic housing part (1) and the computing unit (2) being arranged within the basic housing part (1), and the input arrangement and/or the display arrangement (6) being arranged in the housing attachment (5), which is fastened releasably on the basic housing part (1).

2. Housing according to Claim 1, **characterized in that** a housing attachment (5) is provided for the input arrangement.

3. Housing according to Claim 1 or 2, **characterized in that** a housing attachment (5) is provided for the display arrangement (6).

4. Housing according to one of Claims 1 to 3, **characterized in that** different housing attachments (5) are provided for different input arrangements, which can be fastened optionally on the same basic housing part (1).

5. Housing according to one of Claims 1 to 4, **characterized in that** different housing attachments (5) are provided for different display arrangements (6), which can be fastened optionally on the same basic housing part (1).

6. Housing according to one of Claims 1 to 5, **characterized in that** the housing attachment (5) can be fastened in a form-fitting manner on the basic housing part (1).

7. Housing according to one of Claims 1 to 6, **characterized in that** the computing unit (2) can be connected to the display arrangement (6) and/or to the input arrangement by means of at least one electric connecting cable (8) which is arranged exclusively within the basic housing part (1) or within the housing attachment (5).

8. Housing according to one of Claims 1 to 7, **characterized in that** the computing unit (2) can be connected to the display arrangement (6) and/or to the input arrangement by means of at least one coupling plug connection (10) which is arranged at a location for connecting the basic housing part (1) to the housing attachment (5).

9. Housing according to one of Claims 1 to 8, **characterized in that** the computing unit (2) can be connected to external components, e.g. a power supply or a printer, by means of a cable (11) which is arranged, at least in part, within the mount (3).

10. Housing according to one of Claims 1 to 9, **characterized in that** a single housing attachment (5) is provided, a touch display being arranged, as display arrangement (6) and input arrangement, in said single housing attachment.

11. Housing according to one of Claims 1 to 10, **characterized in that** the basic housing part (1) forms a closed component with the housing attachment (5).

## Revendications

1. Boîtier pour appareil de traitement de données avec une unité centrale, un dispositif d'affichage et un dispositif de saisie (6), le boîtier pouvant être fixé à un véhicule ou de manière fixe sur un poste de travail au moyen d'un support (3), **caractérisé en ce que** le boîtier est réalisé en plusieurs parties et présente une base de boîtier (1) et au moins un couvercle de boîtier (5), le support (3) étant fixé à la base du boîtier (1) et l'unité centrale (2) étant disposée à l'intérieur de la base du boîtier (1) et le dispositif de saisie et/ou le dispositif d'affichage (6) étant disposés dans le couvercle du boîtier(5) qui est fixé de manière amovible à la base du boîtier (1).

2. Boîtier selon la revendication 1, **caractérisé en ce qu'**un couvercle de boîtier (5) est prévu pour le dispositif de saisie.

3. Boîtier selon la revendication 1 ou 2, **caractérisé en ce qu'**un couvercle de boîtier (5) est prévu pour le dispositif d'affichage (6).

4. Boîtier selon l'une des revendications 1 à 3, **caractérisé en ce que** différents couvercles de boîtier (5) sont prévus pour différents dispositifs de saisie, lesquels peuvent être fixés au choix à la même base de boîtier (1).

5. Boîtier selon l'une des revendications 1 à 4, **caractérisé en ce que** différents couvercles de boîtier (5) sont prévus pour différents dispositifs d'affichage (6), lesquels peuvent être fixés au choix à la même base de boîtier (1).

6. Boîtier selon l'une des revendications 1 à 5, **caractérisé en ce que** le couvercle du boîtier (5) peut être fixé à la base du boîtier (1) par fermeture géométrique.

7. Boîtier selon l'une des revendications 1 à 6, **caractérisé en ce que** l'unité centrale (2) peut être reliée au dispositif d'affichage (6) et/ou au dispositif de saisie à l'aide d'au moins un câble de raccordement électrique (8) qui est uniquement logé à l'intérieur de la base du boîtier (1) ou à l'intérieur du couvercle du boîtier (5).

8. Boîtier selon l'une des revendications 1 à 7, **caractérisé en ce que** l'unité centrale (2) peut être reliée au dispositif d'affichage (6) et/ou au dispositif de saisie à l'aide d'au moins une liaison prise/fiche (10) qui est disposée en un point de liaison entre la base du boîtier (1) et le couvercle du boîtier (5).

9. Boîtier selon l'une des revendications 1 à 8, **caractérisé en ce que** l'unité centrale (2) peut être reliée à des composants externes, par exemple une alimentation électrique ou une imprimante, à l'aide d'un câble (11) qui est logé au moins partiellement à l'intérieur du support (3).

10. Boîtier selon l'une des revendications 1 à 9, **caractérisé en ce qu'**un seul couvercle de boîtier (5) est prévu dans lequel est logé un afficheur tactile faisant office de dispositif d'affichage (6) et de dispositif de saisie.

11. Boîtier selon l'une des revendications 1 à 10, **caractérisé en ce que** la base du boîtier (1) forme avec le couvercle du boîtier (5) un élément fermé.
